# EUROPEAN PATENT SPECIFICATION

(11) **EP 2 735 638 B1**
(45) Date of publication and mention of the grant of the patent: **06.07.2016**
(21) Application number: 13190716.4
(22) Date of filing: 29.10.2013
(51) Int. Cl.: D06F 58/20, F16L 23/08

(54) **LAUNDRY PROCESSOR HAVING PIPELINE CONNECTION DEVICE**
WÄSCHEPROZESSOR MIT ROHRLEITUNGSVERBINDUNGSVORRICHTUNG
PROCESSEUR DE LESSIVE AYANT UN DISPOSITIF DE RACCORDEMENT DE PIPELINE

(30) Priority: 21.11.2012 CN 201220631331 U
(43) Date of publication of application: 28.05.2014
(73) Proprietor: BSH Hausgeräte GmbH, 81739 München (DE)
(72) Inventor: Wang, Yongjia, 210000 Nanjing (CN); Ziegler, Jörg, 81739 München (DE)

(56) References cited:
- WO-A1-00/11924
- US-A- 5 015 018
- US-A1- 2005 184 524
- US-A1- 2013 125 410

## Description

The present invention relates to a laundry processor having a pipeline connection device, wherein a pipeline comprises a first pipeline wall and a second pipeline wall joined to each other along a pipeline extending direction, and a third pipeline wall joined to the first pipeline wall and vertical to the pipeline extending direction. In particular, the invention relates to a duct structure of a laundry dryer or laundry washer-dryer.

A common laundry dryer includes a drying cylinder or drum for holding laundry to be dried, and an air circulation channel for passing a flow of air for drying the laundry. The air circulation channel includes an air heating part that heats the air, a blowing part that facilitates the air to flow in the air circulation channel, and a condensation part that condensates humidity from wet hot air from the laundry drum. The air is forced into the laundry drum by a fan in the blowing part after being heated in the air heating part by a heating device, and the hot air takes away part of moisture after contacting wet laundry in the drum, and then enters the condensation part connected with the drum. The moisture in the air is separated from the air in the condensation part. The air from which the moisture is separated re-enters the air heating part under driving of the fan, which is repeated so over and over again, to gradually dry the laundry in the drum.

Currently, a common way of constructing the air heating part and the blowing part is that the air heating part consists of an air heating part cover plate and an air heating part pedestal, the blowing part consists of a blowing part cover plate and a blowing part pedestal, and the four means are joined to one another. With respect to such a drying channel structure, screws are generally used at present for pairwise connection of the four components. As the joint structure is complicated and it is necessary to ensure strict sealing, more screws are required, the assembly is complicated, and in order to design positions of the screws, the design of the means is also complicated.

WO 00/11924 provides a method of clamping flanges of adjacent pipes together by applying a substantially even pressure around and over the periphery of adjacent flanges, wherein the flanges have abutting faces, so that the flange faces are compressed together.

In addition to the connection between the air heating part and the blowing part in the laundry dryer, similar problems also exist in the connection of other pipelines in the laundry dryer. Similarly, it is also necessary to optimize the connection structure of the pipeline for other laundry processors other than the laundry dryer.

Accordingly, an objective of the present invention is to make connection of laundry processing pipelines more convenient and reliable.

With respect to the above objective, the present invention adopts a technical solution as defined in the independent claim attached. Preferred embodiments and improvements of the invention are defined in dependent claims attached and in the subsequent description, and are also shown in the attached drawing.

According to the invention a laundry processor having a pipeline connection device is provided, wherein a pipeline includes a first pipeline wall and a second pipeline wall joined to each other along a pipeline extending direction, and a third pipeline wall joined to the first pipeline wall and vertical to the pipeline extending direction, and the connection device includes a first hoop and a second hoop spanning an outer wall of the pipeline and connected to each other to tightly compress the wall of the pipeline, where the first hoop includes a first slot, an end portion of the first pipeline wall close to the second pipeline wall has a first flange, and an end portion of the second pipeline wall close to the first pipeline wall has a second flange, and the first flange and the second flange are both accommodated in the first slot. Further, the pipeline includes a fourth pipeline wall joined to the third pipeline wall along the pipeline extending direction and joined to the second pipeline wall along a direction vertical to the pipeline extending direction; the second hoop includes a second slot, an end portion of the third pipeline wall close to the fourth pipeline wall has a third flange; an end portion of the fourth pipeline wall close to the third pipeline wall has a fourth flange; and the third flange and the fourth flange are both accommodated in the second slot.

As a preferred improvement to the present invention, a side, with the back to the second flange, of the first flange has a first slope; a side, with the back to the first flange, of the second flange has a second slope; and the first slope and the second slope are gradually drawn together from the first pipeline wall and the second pipeline wall to the outside.

As another preferred improvement to the present invention, the first slot has a side wall tilted from inside to outside.

As a further preferred improvement to the present invention, an inclination of the side wall of the first slot corresponds to the first slope and the second slope, so that the side wall of the first slot fits with the first slope and the second slope.

As yet a further preferred improvement to the present invention, the pipeline is an air flow pipeline.

As still another preferred improvement to the present invention, the first pipeline wall and the third pipeline wall form an air heating part, and the second pipeline wall and the fourth pipeline wall form a blowing part.

Compared with the prior art, the invention uses a connection device with a hoop structure to greatly simplify the connection of pipelines, which has a simple structure and reliable fixation.

One specific preferred implementation manner of the present invention is described below in detail with reference to the accompanying drawing by taking a laundry washer-dryer as an example. It should be clarified that, the present invention is not only applicable to the laundry washer-dryer, but also applicable to any other appropriate laundry processor. Moreover, the present invention is not only applicable to connection between the air heating part and the blowing part, but also applicable to various other appropriate channels in the laundry processor. In the drawing,
FIG. 1 is a schematic structural view of a laundry washer-dryer;
FIG. 2 is a schematic partial view of an air heating part and a blowing part of a laundry dryer;
FIG. 3A is a schematic structural view of a connection device;
FIG. 3B is a schematic sectional view of A-A in FIG. 3A;
FIG. 4A is a schematic sectional view before a connection device is connected with channels;
FIG. 4B is a schematic sectional view after a connection device is connected with channels.

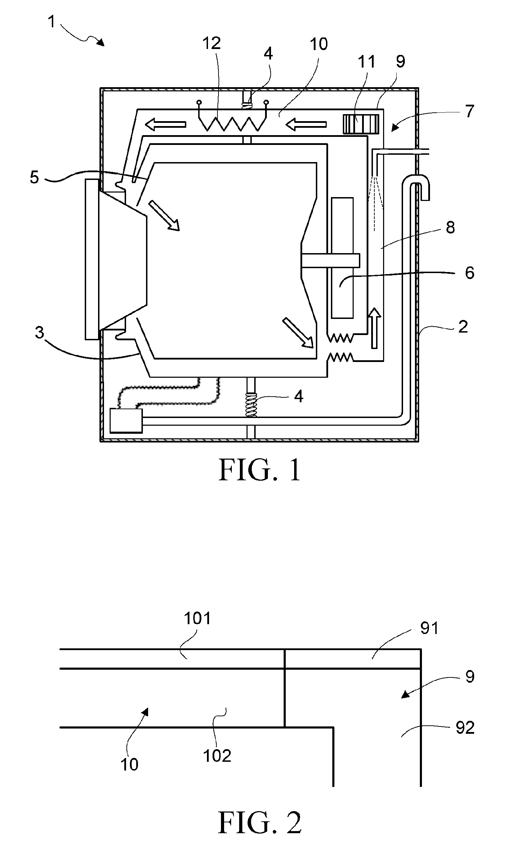

As shown in FIG. 1, a laundry washer-dryer 1 has a case 2. An outer cylinder 3 or tub 3 is suspended in the case 2 through a damping device 4. An inner cylinder 5 or drum 5 is located in the outer cylinder 3 and is rotatable under driving of a motor 6. A number of through holes (not shown in the drawing) are distributed on the inner cylinder 5, and then the inner cylinder 5 is in communication with the outer cylinder 3 spatially. The head and the tail of an air flow channel 7 are respectively connected with the outer cylinder 3, and then the air flow channel 7 forms an air circulation flow system together with the outer cylinder 3. Along a air flow direction, the air flow channel 7 sequentially includes a condensation part 8, a blowing part 9, and an air heating part 10 which are connected with one another and spatially communicate with one another. The blowing part 9 is provided with a fan 11 that promotes air flow, and the air heating part 10 is provided with a heater 12 that heats the air.

The air enters the outer cylinder 3 and the inner cylinder 5 under promotion of the fan 11 after being heated in the air heating part 10 by the heater 12. The hot air takes away part of moisture by contacting wet laundry in the inner cylinder 5, and then enters the condensation part 8 connected with the outer cylinder 3. In the condensation part 8, the temperature of the wet hot air decreases, and the moisture in the air is separated from the air. The air from which the moisture is separated re-enters the air heating part 10 under driving of the fan 11, which is repeated so over and over again, to gradually dry the laundry in the inner cylinder 5.

It can be seen from FIG. 2 that, the air heating part 10 includes an air heating part cover plate 101 and an air heating part pedestal 102, the blowing part 9 includes a blowing part cover plate 91 and a blowing part pedestal 92. A cross-shaped seam is formed at a connection place of the air heating part cover plate 101, the air heating part pedestal 102, the blowing part cover plate 91, and the blowing part pedestal 92.

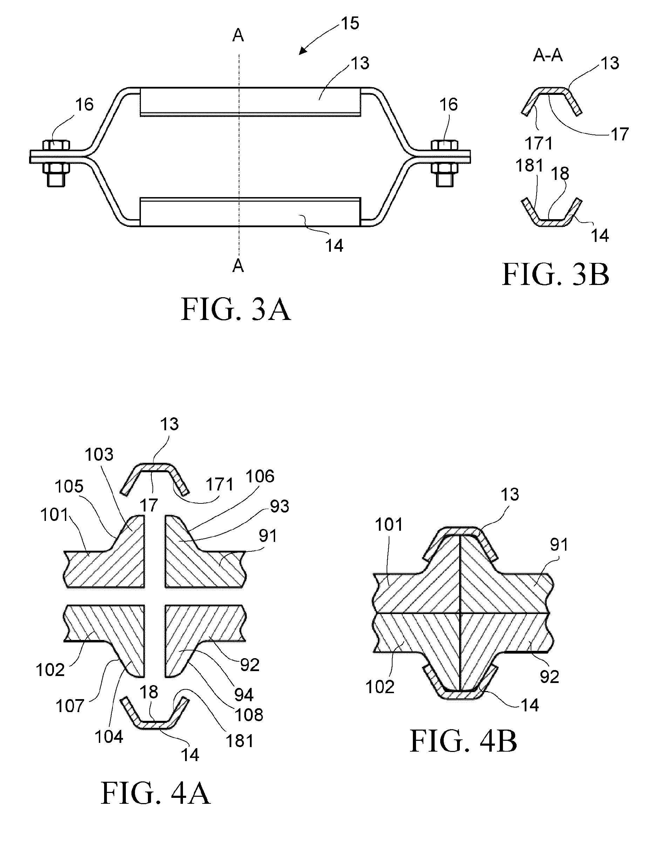

As shown in FIGs. 3A, 3B, 4A, and 4B, a connection device 15 including a first hoop 13 and a second hoop 14 is illustrated. The first hoop 13 is hung above a connection place of the air heating part cover plate 101 and the blowing part cover plate 91, the second hoop 14 is lying below a connection place of the air heating part pedestal 102 and the blowing part pedestal 92. Two ends of the first hoop 13 and the second hoop 14 are fixed respectively through screws 16 and the first hoop 13 and the second hoop 14 tightly compress each other, so as to connect and tightly compress the air heating part cover plate 101, the air heating part pedestal 102, the blowing part cover plate 91, and the blowing part pedestal 92.

The first hoop 13 includes a first slot 17, the second hoop 14 includes a second slot 18, and the first slot 17 and the second slot 18 respectively have side walls 171, 181 tilted from inside to outside. An end portion of the air heating part cover plate 101 close to the blowing part cover plate 91 has a first flange 103, an end portion of the blowing part cover plate 91 close to the air heating part cover plate 101 has a second flange 93, and the first flange 103 and the second flange 93 are both accommodated in the first slot 17. An end portion of the air heating part pedestal 102 close to the blowing part pedestal 92 has a third flange 104, an end portion of the blowing part pedestal 92 close to the air heating part pedestal 102 has a fourth flange 94, and the third flange 104 and the fourth flange 94 are both accommodated in the second slot 18.

A side, with the back to the second flange 93, of the first flange 103 has a first slope 105, a side, with the back to the first flange 103, of the second flange 93 has a second slope 106, and the first slope 105 and the second slope 106 are gradually drawn together from the air heating part cover plate 101 and the blowing part cover plate 91 to the outside. An inclination of the side wall 171 of the first slot corresponds to the first slope 105 and the second slope 106, so that the side wall 171 of the first slot fits with the first slope 105 and the second slope 106.

Correspondingly, a side, with the back to the fourth flange 94, of the third flange 104 has a third slope 107, a side, with the back to the third flange 104, of the fourth flange 94 has a fourth slope 108, and the third slope 107 and the fourth slope 108 are gradually drawn together from the air heating part pedestal 102 and the blowing part pedestal 92 to the outside. An inclination of the side wall 181 of the second slot corresponds to the third slope 107 and the fourth slope 108, so that the side wall 181 of the second slot fits with the third slope 107 and the fourth slope 108.

As the first hoop 13 and the second hoop 14 tightly compress each other, the air heating part cover plate 101 and the air heating part pedestal 102 tightly compress each other, and the blowing part cover plate 91 and the blowing part pedestal 92 tightly compress each other. Meanwhile, due to extrusion of the inclined side wall 171 of the first slot 17 and the side wall 181 of the second slot 18 on the flanges 93, 94, 103, and 104, the air heating part cover plate 101 and the blowing part cover plate 91 tightly compress each other, and the air heating part pedestal 102 and the blowing part pedestal 92 tightly compress each other.

Various specific embodiments described above and shown in the accompanying drawings are merely used for describing the present invention, instead of being all of the present invention. In the scope of the basic technical idea of the present invention, variations in any forms made by persons of ordinary skill in the related art with respect to the present invention should fall within the protection scope of the present invention as defined in the appended claim.

## Claims

1. A laundry processor (1) having a pipeline connection device (15), wherein a pipeline (9, 10) comprises a first pipeline wall (101) and a second pipeline wall (91) joined to each other along a pipeline extending direction, wherein the connection device (15) comprises a first hoop (13) and a second hoop (14) spanning an outer wall of the pipeline (9, 10) and connected to each other to tightly compress the wall of the pipeline (9, 10), the first hoop (13) comprises a first slot (17), an end portion of the first pipeline wall (101) close to the second pipeline wall (91) has a first flange (103), and an end portion of the second pipeline wall (91) close to the first pipeline wall (101) has a second flange (93), and the first flange (103) and the second flange (93) are both accommodated in the first slot (17), **characterized in that**: the pipeline (9, 10) further comprises a third pipeline wall (102) joined to the first pipeline wall (101) and vertical to the pipeline extending direction; and a fourth pipeline wall (92) joined to the third pipeline wall (102) along the pipeline extending direction and joined to the second pipeline wall (91) along a direction vertical to the pipeline extending direction; the second hoop (14) comprises a second slot (18), an end portion of the third pipeline wall (102) close to the fourth pipeline wall (92) has a third flange (104); an end portion of the fourth pipeline wall (92) close to the third pipeline wall (102) has a fourth flange (94); and the third flange (104) and the fourth flange (94) are both accommodated in the second slot (18).

2. The laundry processor (1) according to claim 1, **characterized in that** a side, with the back to the second flange (93), of the first flange (103) has a first slope (105); a side, with the back to the first flange (103), of the second flange (93) has a second slope (106); and the first slope (105) and the second slope (106) are gradually drawn together from the first pipeline wall (101) and the second pipeline wall (91) to the outside.

3. The laundry processor (1) according to claim 2, **characterized in that** the first slot (17) has a side wall (171) tilted from inside to outside.

4. The laundry processor (1) according to claim 3, **characterized in that** an inclination of the side wall (171) of the first slot corresponds to the first slope (105) and the second slope (106), so that the side wall (171) of the first slot fits with the first slope (105) and the second slope (106).

5. The laundry processor (1) according to any one of claims 1 to 4, **characterized in that**: the pipeline (9, 10) is an air flow pipeline.

6. The laundry processor (1) according to claim 5, **characterized in that**: the first pipeline wall (101) and the third pipeline wall (102) form an air heating part (10), and the second pipeline wall (91) and the fourth pipeline wall (92) form a blowing part (9).

## Patentansprüche

1. Wäschebearbeitungsgerät (1) mit einer Rohrleitungsverbindungsvorrichtung (15), wobei eine Rohrleitung (9, 10) eine erste Rohrleitungswand (101) und eine zweite Rohrleitungswand (91) umfasst, die in einer Rohrleitungsverlaufsrichtung miteinander verbunden sind, wobei
die Verbindungsvorrichtung (15) ein erstes Band (13) und ein zweites Band (14) umfasst, die eine Außenwand der Rohrleitung (9, 10) überspannen und so miteinander verbunden sind, dass sie die Wand der Rohrleitung (9, 10) fest zusammendrücken, wobei das erste Band (13) eine erste Vertiefung (17) umfasst, ein Endabschnitt der ersten Rohrleitungswand (101) in der Nähe der zweiten Rohrleitungswand (91) einen ersten Flansch (103) und ein Endabschnitt der zweiten Rohrleitungswand (91) in der Nähe der ersten Rohrleitungswand (101) einen zweiten Flansch (93) aufweist und der erste Flansch (103) und der zweite Flansch (93) beide in der ersten Vertiefung (17) untergebracht sind,
**dadurch gekennzeichnet, dass**: die Rohrleitung (9, 10) ferner eine dritte Rohrleitungswand (102), die mit der ersten Rohrleitungswand (101) verbunden ist und vertikal zur Rohrleitungsverlaufsrichtung verläuft, und eine vierte Rohrleitungswand (92) umfasst, die in Rohrleitungsverlaufsrichtung mit der dritten Rohrleitungswand (102) und in einer vertikal zur Rohrleitungsverlaufsrichtung verlaufenden Richtung mit der zweiten Rohrleitungswand (91) verbunden ist, das zweite Band (14) eine zweite Vertiefung (18) umfasst, ein Endabschnitt der dritten Rohrleitungswand (102) in der Nähe der vierten Rohrleitungswand (92) einen dritten Flansch (104) aufweist, ein Endabschnitt der vierten Rohrleitungswand (92) in der Nähe der dritten Rohrleitungswand (102) einen vierten Flansch (94) aufweist und der dritte Flansch (104) und der vierte Flansch (94) beide in der zweiten Vertiefung (18) untergebracht sind.

2. Wäschebearbeitungsgerät (1) nach Anspruch 1, **dadurch gekennzeichnet, dass** eine mit der Rückseite dem zweiten Flansch (93) zugewandte Seite des ersten Flansches (103) eine erste Schräge (105) aufweist, eine mit der Rückseite dem ersten Flansch (103) zugewandte Seite des zweiten Flansches (93) eine zweite Schräge (106) aufweist und die erste Schräge (105) und die zweite Schräge (106) von der ersten Rohrleitungswand (101) und der zweiten Rohrleitungswand (91) aus nach außen hin allmählich zusammenlaufen.

3. Wäschebearbeitungsgerät (1) nach Anspruch 2, **dadurch gekennzeichnet, dass** die erste Vertiefung (17) eine Seitenwand (171) aufweist, die von innen nach außen hin schräg ist.

4. Wäschebearbeitungsgerät (1) nach Anspruch 3, **dadurch gekennzeichnet, dass** eine Neigung der Seitenwand (171) der ersten Vertiefung der ersten Schräge (105) und der zweiten Schräge (106) entspricht, so dass die Seitenwand (171) der ersten Vertiefung zur ersten Schräge (105) und zur zweiten Schräge (106) passt.

5. Wäschebearbeitungsgerät (1) nach einem der Ansprüche 1 bis 4, **dadurch gekennzeichnet, dass**: es sich bei der Rohrleitung (9, 10) um eine Luftrohrleitung handelt.

6. Wäschebearbeitungsgerät (1) nach Anspruch 5, **dadurch gekennzeichnet, dass**: die erste Rohrleitungswand (101) und die dritte Rohrleitungswand (102) einen Luftheizteil (10) und die zweite Rohrleitungswand (91) und die vierte Rohrleitungswand (92) einen Blasteil (9) bilden.

## Revendications

1. Appareil (1) de traitement de linge ayant un dispositif (15) de connexion de canalisations, dans lequel une canalisation (9, 10) comprend une première paroi (101) de canalisation et une deuxième paroi (91) de canalisation jointes l'une à l'autre le long d'un sens d'extension de canalisation, dans lequel
le dispositif (15) de connexion comprend un premier feuillard (13) et un deuxième feuillard (14) couvrant une paroi extérieure de la canalisation (9, 10) et connectés l'un à l'autre pour étroitement comprimer la paroi de la canalisation (9, 10), le premier feuillard (13) comprend une première fente (17), une partie d'extrémité de la première paroi (101) de canalisation proche de la deuxième paroi (91) de canalisation a un premier rebord (103), et une partie d'extrémité de la deuxième paroi (91) de canalisation proche de la première paroi (101) de canalisation a un deuxième rebord (93), et le premier rebord (103) et le deuxième rebord (93) sont tous les deux reçus dans la première fente (17), **caractérisé en ce que** la canalisation (9, 10) comprend en outre une troisième paroi (102) de canalisation jointe à la première paroi (101) de canalisation et verticale par rapport au sens d'extension de canalisation ; et une quatrième paroi (92) de canalisation jointe à la troisième paroi (102) de canalisation le long du sens d'extension de canalisation et jointe à la deuxième paroi (91) de canalisation le long d'un sens vertical par rapport au sens d'extension de canalisation ; le deuxième feuillard (14) comprend une deuxième fente (18), une partie d'extrémité de la troisième paroi (102) de canalisation proche de la quatrième paroi (92) de canalisation a un troisième rebord (104) ; une partie d'extrémité de la quatrième paroi (92) de canalisation proche de la troisième paroi (102) de canalisation a un quatrième rebord (94) ; et le troisième rebord (104) et le quatrième rebord (94) sont tous les deux reçus dans la deuxième fente (18).

2. Appareil (1) de traitement de linge selon la revendication 1, **caractérisé en ce qu'**un côté, avec le dos du deuxième rebord (93), du premier rebord (103) a une première pente (105) ; un côté, avec le dos du premier rebord (103), du deuxième rebord (93) a une deuxième pente (106) ; et la première pente (105) et la deuxième pente (106) sont graduellement rapprochées ensemble de la première paroi (101) de canalisation et de la deuxième paroi (91) de canalisation vers l'extérieur.

3. Appareil (1) de traitement de linge selon la revendication 2, **caractérisé en ce que** la première fente (17) a une paroi latérale (171) inclinée de l'intérieur vers l'extérieur.

4. Appareil (1) de traitement de linge selon la revendication 3, **caractérisé en ce qu'**une inclinaison de la paroi latérale (171) de la première fente correspond à la première pente (105) et à la deuxième pente (106), de sorte que la paroi latérale (171) de la première fente s'ajuste avec la première pente (105) et la deuxième pente (106).

5. Appareil (1) de traitement de linge selon l'une quelconque des revendications 1 à 4, **caractérisé en ce que** la canalisation (9, 10) est une canalisation d'écoulement d'air.

6. Appareil (1) de traitement de linge selon la revendication 5, **caractérisé en ce que** : la première paroi (101) de canalisation et la troisième paroi (102) de canalisation forment une partie (10) de chauffage d'air, et la deuxième paroi (91) de canalisation et la quatrième paroi (92) de canalisation forment une partie de soufflage (9).
